# EUROPEAN PATENT APPLICATION

(11) **EP 4 706 930 A1**
(43) Date of publication of application: **11.03.2026**
(21) Application number: 25810769.7
(22) Date of filing: 31.01.2025
(51) Int. Cl.: B29C 45/27, B29C 45/23, B29C 45/14, B29C 45/04, B29C 45/28

(54) **INJECTION MOLDING MACHINE**

(30) Priority: 09.07.2024 KR 20240090710
(71) Applicant: LG ELECTRONICS, INC., Seoul 07336 (KR)
(72) Inventor: The designation of the inventor has not yet been filed
(74) Representative: Schornack, Oliver
(86) International application number: PCT/KR2025/099160
(87) International publication number: WO 2026/015008

(57) **Abstract**

An injection molding machine includes a rotary station having a rotational driving source arranged; a rotary arranged above the rotary station and rotated by the rotational driving source; a plurality of molds arranged spaced apart from each other on the rotary, at least one of a fixed mold and a movable mold having a cavity formed therein, and an injection passage formed in the movable mold through which material passes; an injection machine molding and supplying a material; a guide having a guide passage formed therein for guiding a material supplied from the injection machine to the injection passage; an lifting and lowering mechanism lifting and lowering the guide, and an extraction mechanism lifting an lowering a movable mold of a mold located in an extraction area among the plurality of molds, in which when the guide is lowered by the lifting and lowering mechanism, the movable mold can be pressed from above the movable mold.

## Description

### [Technical Field]

The present disclosure relates to an injection molding machine capable of injection molding a product.

### [Background Art]

Methods for manufacturing products using synthetic resins such as plastic as raw materials include injection molding using an injection mold, vacuum molding using suction of air, and blow molding using air blow.

The injection molding method can be performed by an injection molding device, and the injection molding device is a device that injects molten resin or the like into a cavity, which is a space within a mold, and then cools the molten resin within the cavity within the mold to manufacture an injection molded product.

An injection molding device includes a mold having a cavity formed in the same shape as a molded product to be manufactured, and an injection machine that injects molten resin into the cavity. The mold may include a fixed mold and a movable mold that is coupled to and separated from the fixed mold, and the cavity may be formed between the fixed mold and the movable mold.

The molten resin injected into the cavity in the injection machine can be cooled and solidified in the cavity, and the cooled injection molded product can be extracted out of the mold after the movable mold is separated from the fixed mold.

Such an injection molding device may include an injection machine and a pair of molds, and each of the pair of molds may include a fixed mold and a movable mold.

If the maximum force that fastens the fixed mold and the movable mold of the injection molding device, that is, the clamping force, is low, the precision of the product may deteriorate and the defect rate may increase.

### [Disclosure]

### [Technical Problem]

An object of the present embodiment is to provide an injection molding machine having a simple guide configuration and easy guide manufacturing.

### [Technical Solution]

An injection molding machine according to the present embodiment includes a mold in which a cavity is formed in at least one of a fixed mold and a movable mold and in which an injection passage through which a material passes through the movable mold is formed; an injection machine molding and supplying a material; a guide guiding the material supplied from the injection machine into the injection passage; and a lifting and lowering mechanism lifting and lowering the guide, in which when the guide is lowered by the lifting and lowering mechanism, the guide may press the movable mold from an upper side of the movable mold.

The guide may include an upper plate; and a lower plate having an upper surface bonded to a lower surface of the upper plate.

An upper guide groove may be formed on the lower surface of the upper plate for guiding material in a horizontal direction.

A lower guide groove may be formed on the upper surface of the lower plate for guiding material in a horizontal direction opposite the upper guide groove.

A guide passage may be formed penetrating the lower plate for guiding material guided by the upper guide groove and the lower guide groove to the injection passage.

The upper surface of the lower plate may be diffusion bonded to the lower surface of the upper plate.

The movable mold may be seated on an upper surface of the fixed mold.

The lower plate may be in contact with an upper surface of the movable mold when the guide is lowered by the lifting and lowering mechanism.

The injection molding machine may further include an one-way valve.

A one-way valve may be placed in the injection passage. The one-way valve may be opened by the material.

The one-way valve may include a valve body having an upper through-hole and a lower through-hole formed therein; a valve element arranged to be lifted and lowered in the valve body and opens and closes the upper through-hole; a spring elastically supporting the valve element; and a spring seat supporting the spring inside the valve body and having an inner through-hole formed through which a material passes.

The injection molding machine may further include a cylinder arranged on the upper plate or the lower plate; and a lifting and lowering pin lowered into the upper through-hole or lifted above the upper through-hole by the cylinder.

An outer circumference of the lifting and lowering pin may be spaced from the guide passage in a horizontal direction.

The injection molding machine may further include an advance and retreat mechanism.

The advance and retreat mechanism may advance the injection machine to the guide or retreat the injection machine from the guide.

The guide may include an injection machine facing surface facing the injection machine, and a movable mold facing surface facing the movable mold.

An inlet of the upper guide groove and an inlet of the lower guide groove may be formed on the injection machine facing surface.

An outlet of the guide passage may be formed on the movable mold facing surface.

The upper guide groove and the lower guide groove may be opened in a horizontal direction.

The guide passage may be opened in a vertical direction.

The guide may include a lower surface, an upper surface, and a plurality of peripheral surfaces.

The injection machine facing surface may be one of the plurality of peripheral surfaces.

The movable mold facing surface may be the lower surface.

A guide heater may be installed in the guide for heating the upper guide groove and the lower guide groove.

The lifting and lowering mechanism may include a lifting and lowering guide; an upper body installed on the lifting and lowering guide; a pressure cylinder installed on the upper body; and a guide holder lifted and lowered by the pressure cylinder.

The guide may be arranged below the guide holder.

The injection molding machine may further include a rotary station having a rotational driving source arranged; and a rotary arranged above the rotary station and rotated by the rotational driving source.

A plurality of molds may be provided, and the plurality of molds may be arranged spaced apart from each other on the rotary.

The fixed mold may be fixed to an upper surface of the rotary.

### [Advantageous Effect]

According to this embodiment, since a guide that guides a material into an injection passage of a movable mold presses the movable mold from the upper side of the movable mold, the load of the mold and the pressing force of the guide act in a vertical direction, and a decrease in precision that may occur when the mold is deformed can be minimized.

In addition, the molding force for fastening the movable mold to the fixed mold is applied in the vertical direction, and the injection direction of the injection machine is implemented in the horizontal direction, so that it can be used without modifying the mold.

In addition, the upper guide groove of the upper plate and the upper guide groove of the lower plate guide the material in the horizontal direction, and the guide passage formed in the lower plate guides the material in the vertical direction, so that the flow direction of the material can be changed by the guide with a simple structure, pressure loss can be minimized during injection molding, and the product can be uniform.

### [Description of Drawings]

FIG. 1 is a plan view illustrating an injection molding machine according to the present embodiment;
FIG. 2 is a side view illustrating an injection molding machine according to the present embodiment;
FIG. 3 is an operating state diagram illustrating an injection molding machine according to the present embodiment;
FIG. 4 is a view illustrating a guide according to the present embodiment;
FIG. 5 is a diagram illustrating a movable mold according to the present embodiment;
FIG. 6 is a view illustrating when the injection passage of the movable mold according to the present embodiment is closed;
FIG. 7 is a view illustrating when the injection passage of the movable mold according to the present embodiment is opened;
FIG. 8 is a plan view illustrating a spring sheet according to the present embodiment; and
FIG. 9 is a control block diagram illustrating an injection molding machine according to the present embodiment.

### [Best Mode]

Hereinafter, specific embodiments of the present disclosure will be described in detail with reference to the drawings.

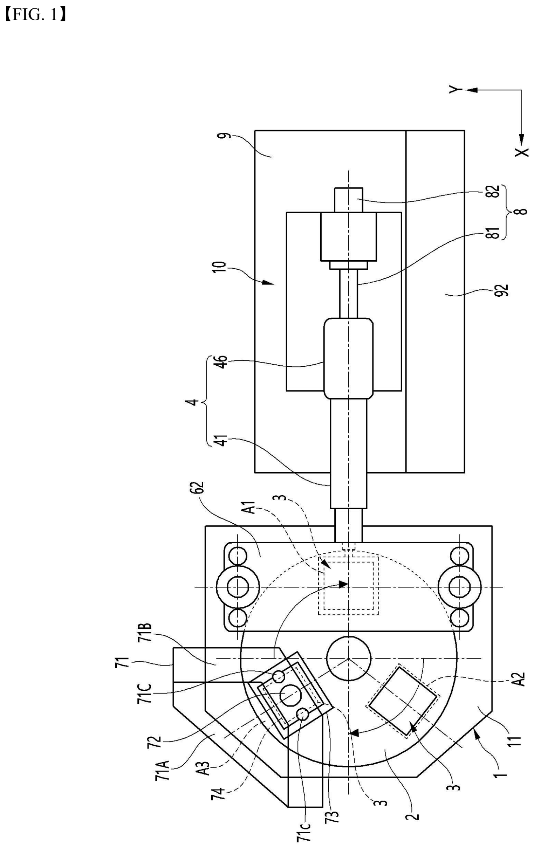

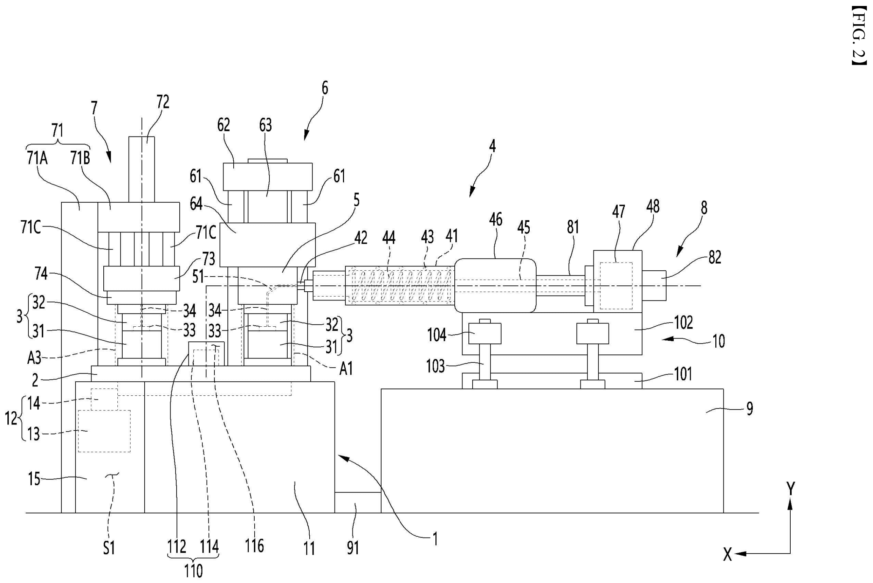

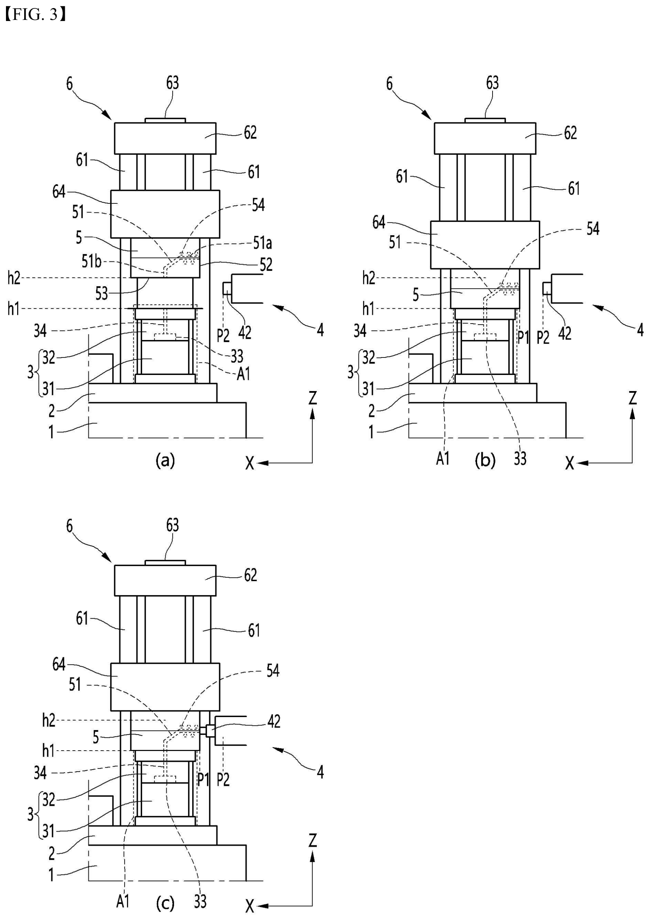

FIG. 1 is a plan view illustrating an injection molding machine according to the present embodiment, and FIG. 2 is a side view illustrating an injection molding machine according to the present embodiment; and FIG. 3 is an operating state view illustrating an injection molding machine according to the present embodiment.

FIG. 3 (a) is a view when the lifting and lowering mechanism does not press the guide with the movable mold and the nozzle of the injection machine is not connected to the guide, FIG. 3 (b) is a view illustrating a case where the lifting and lowering mechanism presses the guide with a movable mold and the nozzle of the injection machine is not connected to the guide, and FIG. 3 (c) is a view illustrating a case where the lifting and lowering mechanism presses the guide with a movable mold and the nozzle of the injection machine is connected to the guide.

An injection molding machine according to the present embodiment may include a rotary station 1; a rotary 2; a plurality of molds 3; an injection machine 4; a guide 5; a lifting and lowering mechanism 6, and an extraction mechanism 7.

The rotary station 1 may include a station body 11 forming an outer appearance thereof.

The station body 11 may be a fixed table that rotatably supports the rotary 2. A space S1 in which a rotational driving source 12 is accommodated may be formed inside the station body 11. The station body 11 may include a door 15 that can be opened and closed.

The rotary station 1 may include a rotary driving source 12 that rotates the rotary 2.

The rotation driving source 12 can be placed inside the station body 11.

The rotary driving source 12 may include a motor 13 that generates rotary driving force and a reducer 14 that transmits the driving force generated from the motor 13 to the rotary 2.

The motor 13 may include a rotating shaft, and an example of the motor 13 may be a servo motor.

The reducer 14 may include a driving gear connected to the rotation shaft of the motor 12 and a driven gear that rotates the rotary 2. The reducer 14 may further include an intermediate gear that transmits power between the driving gear and the driven gear.

The rotary driving source 12 can repeat the rotation mode and the stationary mode.

The rotation mode may be a mode in which the rotation driving source 12 rotates the rotary 2 by 120°.

The stationary mode may be a mode in which the rotary driving source 12 does not rotate the rotary 2 and the rotary 2 is stationary.

The rotary 2 can be placed on the upper side of the rotary station 1. The rotary 2 can be placed horizontally on the upper side of the rotary station 1. The rotary 2 can be a circular plate or a ring-shaped plate. The rotary 2 can be rotated around a central axis of rotation. The central axis of rotation of the rotary 2 can be a vertical central axis which is the upper and lower direction Z.

The rotary 2 may be a rotary table which is rotated by a rotary driving source 12.

The rotary 2 can be a rotary table on which a plurality of molds 3 are seated, and the positions of each of the plurality of molds 3 can be changed.

The lower surface of the rotary 2 can face the rotary station 1 in the upper and lower direction Z.

The upper surface of the rotary 2 may be a mold seating surface on which plurality of molds 3 are seated.

The upper surface of the rotary 2 may include an injection region A1; a cooling region A2; and an extraction region A3.

The injection region A1 may be a region where one of the plurality of molds 3 is positioned below the guide 5.

The mold 3 located on the lower side of the guide 5 can be pressurized by the guide 5 and can receive material from the guide 5.

Any one of the plurality of molds 3 can be pressed downward by a guide 5 in the injection region A1 and can receive material from the guide 5.

The cooling region A2 may be a region where another one of the plurality of molds 3 is cooled. The mold 3 located in the cooling region A2 may be cooled by air cooling or water cooling.

The extraction region A3 may be a region where the other one of the plurality of molds 3 is located below the extraction mechanism 7. The mold 3 located below the extraction mechanism 7 can be opened by the extraction mechanism 7 in the extraction region A3. The opened mold 3 can be closed by the extraction mechanism 7 in the extraction region A3.

A plurality of molds 3 can be disposed spaced apart from each other on the rotary 2. Each of the plurality of molds 3 can be disposed on an upper surface of the rotary 2 other than the rotational center axis of the rotary 2 and not on the rotational center axis of the rotary 2.

A plurality of molds 3 can be disposed equiangularly and spaced apart from each other on the rotary 2. The plurality of molds 3 can be spaced apart in the horizontal direction XY. The number of the plurality of molds 3 can be three or four.

When there are three molds 3, the plurality of molds 3 can be disposed at intervals of 120° on the upper surface of the rotary 2. When there are four molds 4, the plurality of molds 3 can be disposed at intervals of 90° on the upper surface of the rotary 2.

Hereinafter, it is described that there are three molds 3 placed in the rotary 2, but of course, the number of molds 3 is not limited.

Each of the plurality of molds 3 may include a fixed mold 31 and a movable mold 32.

A fixed mold 31 and a movable mold 32 can form one set, and an injection molding machine can include a plurality of sets of molds 3.

When there are three sets of molds 3, one set of molds 3 can be positioned in the injection region A1, another set of molds 3 can be positioned in the cooling region A2, and the other set of molds 3 can be positioned in the extraction region A3.

A cavity 33 may be formed in at least one of the fixed mold 31 and the movable mold 32. When the cavity 33 is formed in the fixed mold 31, the cavity 33 may be a fixed cavity formed on the upper surface of the fixed mold. When the cavity 33 is formed in the movable mold 32, the cavity 33 may be a movable cavity formed on the lower surface of the movable mold 32.

The fixed mold 31 can be seated on the upper surface of the rotary 2. The fixed mold 31 can be fixed to the upper surface of the rotary 2.

The movable mold 32 can be seated on the upper surface of the fixed mold 31. The movable mold 32 can be seated on the upper surface of the fixed mold 31 and closed with the fixed mold 31, and can be raised from the fixed mold 31 and opened with the fixed mold 31.

When the movable mold 32 is seated on the fixed mold 31, the movable mold 32 can press the fixed mold 31 from the upper side of the fixed mold 31, and the load of the movable mold 32 can be applied to the fixed mold 31.

An injection passage 34 through which material passes may be formed in at least one of the fixed mold 31 and the movable mold 32. The injection passage 34 may be a material input passage for injecting material into the cavity 33.

The injection passage 34 may be formed in the fixed mold 31 and not formed in the movable mold 32. The injection passage 34 may be formed in the movable mold 32 and not formed in the fixed mold 31. The injection passage 34 may also be formed in each of the fixed mold 31 and the movable mold 32.

When the injection passage 34 is formed in the movable mold 32, the height of the injection machine 4 can be high, interference between the injection machine 4 and the rotary 2 can be minimized, and it is preferable that the injection passage 34 is formed in the movable mold 32.

Hereinafter, the injection passage 34 is described as being formed in a movable mold 32, but the injection passage 34 is not limited to being formed in a movable mold 32, and it is of course also possible to form the injection passage in a fixed mold 31.

The inlet of the injection passage 34 may be formed on the upper surface of the movable mold 32, and the outlet of the injection passage 34 may be communicated with the cavity 33. The injection passage 34 may include a vertical passage formed long in the upper and lower direction Z in the movable mold 32.

The injection machine 4 can mold and supply the material. The injection machine 4 can heat the raw material, that is, resin, to change the resin into molten resin, and supply the converted molten resin to the guide 5. In other words, the injection machine 4 can supply the material (that is, molten resin) to the guide 5.

An injection machine 4 may include an injection molding machine body 41 having an internal passage formed therein; a nozzle 42 installed in the injection molding machine body 41; a main heater 43 installed in the injection machine 41; a screw 44 rotatably accommodated in the internal passage; a shaft 45 rotating the screw 44; and a shaft supporter 46 supporting the shaft 44.

The injection molding machine body 41 can be formed with a hopper through which material is fed into an internal passage.

The nozzle 42 can be formed on one end of the injection molding machine body 41.

The main heater 43 can be installed between the inner and outer walls of the injection molding machine body 41.

The screw 44 can be disposed long in a front and rear direction X in the internal passage, and when rotated, can transport the material to the nozzle 42.

A shaft 45 can be connected to one end of a screw 44. The shaft 45 can be disposed long in the front and rear direction X.

The shaft supporter 46 can be connected to the other end of the injection molding machine body 41.

The injection machine 4 may further include an injection motor 47 that rotates the shaft 45.

An injection molding machine may include a motor housing 48 surrounding an injection motor 47.

The injection motor 47 can be placed in the shaft supporter 46 or the motor housing 48.

The injection molding machine may further include an advance and retreat mechanism 8.

The advance and retreat mechanism 8 can advance the injection machine 4 to the guide 5 or retreat the injection machine 4 from the guide 5.

The advance and retreat mechanism 8 can advance and retreat the injection machine 4 in the front and rear direction X.

The advance and retreat mechanism 8 may include an advance and retreat shaft 81 and an advance and retreat driving source 82 that advances and retreats the advance and retreat shaft 81.

The advance and retreat shaft 81 can be connected to the injection machine 4 and can advance and retreat the injection machine 4 in the front and rear direction X.

The advance and retreat shaft 81 can be connected to at least one of the injection molding machine body 41 and the shaft supporter 46.

The advance and retreat shaft 81 may be a hollow shaft, and the shaft 45 may be rotatably accommodated inside the advance and retreat shaft 81.

The advance and retreat driving source 82 may include a advance and retreat motor capable of advancing and retreating the advance and retreat shaft 81. The advance and retreat driving source 82 may further include at least one power transmission member that transmits the driving force of the advance and retreat motor to the advance and retreat shaft.

The advance and retreat driving source 82 can be placed in the motor housing 48.

The injection machine 4 can be advanced to the first position P1 by the advance and retreat mechanism 8 as illustrated in FIG. 3(c) and connected to the guide 5.

The injection machine 4 can be retreated to the second position P2 as illustrated in FIG. 3(a) or (b), and can be spaced apart from the guide 5 in the front and rear direction X.

The injection machine 4 can be advanced to the first position P1 and connected to the guide 5 after the guide 5 is lowered by the lifting and lowering mechanism 6.

The injection machine 4 can be retreated to the second position P2 before the guide 5 is lifted by the lifting and lowering mechanism 6 and separated from the guide 5.

When the injection machine 4 is positioned at the second position P2, the lifting and lowering mechanism 6 can lift and lower the guide 5 to the first height h1 or the second height h2.

When the lifting and lowering mechanism 6 lowers the guide 5 to the first height h1, the advance and retreat mechanism 8 can advance the injection machine 4 to the first position P1.

While the advance and retreat mechanism 8 has retreated the injection machine 4 to the second position P2, the lifting and lowering mechanism 6 can lift the guide 5 to the second height h2.

The guide 5 can pressurize the movable core 32 to the fixed core 31.

The guide 5 can guide the material supplied from the injection machine 4 to the mold 3. The guide 5 can guide the material supplied from the injection machine 4 to the injection passage 34.

A guidance-passage 51 can be formed in the guide 5, and the guidance-passage 51 can guide the material supplied from the injection machine 4 to the guide 5 to the injection passage 34 of the mold 3. The guidance-passage 51 can guide the material supplied from the injection machine 4 to the guide 5 to the movable core 32. The guidance-passage 51 can guide the material supplied from the injection machine 4 to the injection passage 34 of the mold 3 located in the injection region A1.

The guide 5 may be separated from or connected to each of the movable mold 32 and the injection machine 4. The guide 5 may be a nozzle-to-mold connector between the nozzle 42 and the movable core 32.

When the guide 5 presses the movable mold 32 of the mold 3 and the nozzle 42 of the injection machine 4 is connected to the guidance-passage 51 of the guide 5, the injection machine 4 can supply material to the guidance-passage 51 of the guide 5, the guide 5 can guide the material in the guidance-passage 51 to the injection passage 34, and the material guided to the injection passage 34 can be injected into the cavity 33.

When the guide 5 is lowered by the lifting and lowering mechanism 6, the guide can pressurize the movable mold 32 from the upper side of the movable mold 32.

When the guide 5 presses the movable mold 32 from the upper side of the movable mold 32, the pressing force acts in a downward direction, and the mold fastening force that fastens the movable mold 32 with the fixed mold 31 can be maximized.

The weight of the mold 3 and the pressure of the guide 5 can be applied to the ground on which the injection molding machine is installed, and the deterioration of the precision of the product due to loss or deformation of the mold 3 can be minimized.

In other words, the guide 5 may be a pressing member that improves the mold fastening force and a material guide that transfers the material to the movable mold 32.

The guide 5 can be placed in the guide holder 64 of the lifting and lowering mechanism 6. The upper surface of the guide 5 can be placed below the guide holder 64.

The guide 5 may include an injection molding machine facing surface 52 facing the injection machine 4 and a movable mold facing surface 53 facing the movable mold 32, as illustrated in FIG. 3 (a).

The injection molding machine facing surface 52 can face the injection machine 4 in the front and rear direction X.

The movable mold facing surface 53 can face the movable mold 32 in the upper and lower direction Z.

The inlet 51a of the guidance-passage 51 can be formed on the injection molding machine facing surface 52.

The outlet 51b of the guidance-passage 51 can be formed on the movable mold facing surface 53.

The guidance-passage 51 may have a shape that is bent at least once.

The opening direction of the inlet 51a and the opening direction of the outlet 51b may be different. The opening direction of the inlet 51a and the opening direction of the outlet 51b may be orthogonal.

The opening direction of the inlet 51a can be horizontal and can be the same as the advancing/retreating direction X of the injection machine 4. The opening direction of the inlet 51a can be the front and rear direction X.

The opening direction of the outlet 51b can be vertical or in the upper and lower direction Z.

The guide 5 may include a plurality of peripheral surfaces and a lower surface and an upper surface.

One of the plurality of peripheral surfaces of the guide 5 can be in contact with or separated from the nozzle 42.

The lower surface of the guide 5 can be in contact with or separated from the movable mold 32.

The upper surface of the guide 5 may be a fixed surface fixed to the guide holder 64.

The injection molding machine facing surface 52 may be one of the multiple peripheral surfaces of the guide 5.

The movable mold facing surface 53 may be the lower surface of the guide 5.

A guide heater 54 for heating the guidance-passage 51 may be installed in the guide 5. The guide heater 54 can heat the material passing through the guidance-passage 51 so that the molten resin, which is the material, is not cooled while passing through the guide 5.

The lifting and lowering mechanism 6 can lift and lower the guide 5.

The lifting and lowering mechanism 6 may include a lifting and lowering guide 61; an upper body 62 installed on the lifting and lowering guide 61; a pressure cylinder 63 installed on the upper body 62; and a guide holder 64 lifted and lowered by the pressure cylinder 63.

The lifting and lowering guide 61 can be placed on the rotary station 1. The lifting and lowering guide 61 can be supported on the rotary station 1. A pair of lifting and lowering guides 61 can be placed in the upper and lower direction on the rotary station 1. A pair of lifting and lowering guides 61 can be spaced apart in the horizontal direction.

The upper body 62 can be placed horizontally on the upper part of the lifting and lowering guide 61.

The pressure cylinder 63 can be supported on the upper body 62 and spaced apart from the upper surface of the rotary station 1 in the upper and lower direction Z.

The guide holder 64 can be lifted and lowered in the upper and lower direction Z by the pressure cylinder 63.

A pair of guide holes guided by a pair of lifting and lowering guides 61 may be formed in the guide holder 64. Each of the pair of guide holes may be formed to be open in the upper and lower direction Z of the guide holder 64.

The guide holder 64 may be a guide fastening plate to which the guide 5 is fastened. The lower surface of the guide holder 64 may be a guide fastening surface to which the guide 5 is fastened. The guide 5 may be hung on the guide holder 64.

When the guide holder 64 is lowered, the guide 5 can press the pressure roller 32 downward, and when the guide holder 64 is lifted, the guide 5 can be spaced apart from the pressure roller 32 in the upper and lower direction Z.

The lifting and lowering mechanism 6 can maintain the guide 5 at the second height h2 while the rotary 2 rotates, and when one of the plurality of molds 3 completes moving to the injection region A1, the guide 5 can be lowered to the first height H1.

The extraction mechanism 7 can lift and lower the movable mold 32 of the mold 3 located in the extraction region A3 among plurality of molds 3.

The extraction mechanism 7 can lift the movable mold 32 among the molds 3 located in the extraction region A3 to open the mold 3 located in the extraction region A3.

After the extraction mechanism 7 opens the mold 3, a machine such as a robot can extract a product (that is, a molded product or a finished product) from the opened mold 3.

The extraction mechanism 7 may include a frame 71; an extraction cylinder 72 supported on the frame 71; a lifting and lowering body 73 lifted and lowered by the extraction cylinder 72; and a magnet 74 disposed on the lifting and lowering body 73 and is magnetically attached to and detached from the movable mold 32.

The frame 71 can be placed in the rotary station 1. The frame 71 can be positioned around the rotary station 1.

The frame 71 may include a vertical frame 71A and a horizontal frame 71B.

The vertical frame 71A can be long in the upper and lower direction Z.

The horizontal frame 71B can extend horizontally from the upper portion of the vertical frame 71A.

A lifting and lowering guide 71C can be placed on the frame 71.

The lifting and lowering guide 71C can extend downward from the horizontal frame 71B. A pair of lifting and lowering guides 71C can be disposed on the horizontal frame 71B. The pair of lifting and lowering guides 71C can be spaced apart in the horizontal direction.

The extraction cylinder 72 can lower the lifting and lowering body 73 when a plurality of other molds 3 have been moved to the extraction region A3, and the magnet 74 disposed in the extraction body 73 can be magnetically fixed to the movable mold 32 of the mold 3 located in the extraction region A3.

The extraction cylinder 72 can lift the lifting and lowering body 73 when the magnet 74 is magnetically fixed to the movable mold 32 of the mold 3 located in the extraction region A3.

The lifting and lowering body 73 can be lifted and lowered by the extraction cylinder 72, and the magnet 74 can be pressed into the movable mold 32 among the molds 3.

The lower surface of the lifting and lowering body 73 may be a magnet attachment surface to which a magnet 74 is attached.

The magnet 74 can be placed on the lower surface of the lifting and lowering body 73, and when it is lifted by the lifting and lowering body 73 while being magnetically fixed to the movable mold 32 among the molds 3, the movable mold 32 can be lifted. At this time, the movable mold 32 can be opened with the fixed mold 31.

The magnet 74 can be lowered to press the movable mold 32 downward and close the movable mold 32 with the fixed mold 31.

When the rotary 2 rotates while the movable mold 32 is closed with the fixed mold 31, the movable mold 32 moves horizontally together with the fixed mold 31, and the movable mold 32 can be separated from the magnet 74.

The injection molding machine may further include a shelf 9 and a height adjustment mechanism 10.

The shelf 9 can be spaced apart from the rotary 2. The shelf 9 can be spaced apart from the rotary station 1. The shelf 9 can be spaced apart from the rotary station 1 in the front and rear direction X.

The shelf 9 can be connected to the rotary station 1 and the bridge 91.

A control device 92, such as a control board, can be placed on the shelf 9.

The height adjustment mechanism 10 can be placed on the shelf 9. The height adjustment mechanism 10 can be placed on the upper surface of the shelf 9. The height adjustment mechanism 10 can support the injection machine 4 and the advance and retreat mechanism 8.

The height adjustment mechanism 10 may include a fixed plate 101, a lifting and lowering plate 102 positioned above the fixed plate 101, and a plurality of height adjustment members 103, 104 that support the lifting and lowering plate 102 and adjust the height of the lifting and lowering plate 102.

The plurality of height adjustment members 103, 104 may include a lifting and lowering bolt 103 rotatably disposed on a fixed plate 101 and a nut 104 that is lifted and lowered along the outer surface of the lifting and lowering bar 103 and fixed to the lifting and lowering plate 102.

When the worker rotates the lifting and lowering bolt 103, the lifting and lowering plate 102 can be lifted and lowered, and the height of the injection machine 4 and the advance and retreat mechanism 8 can be adjusted.

The multi-injection molding machine may further include a slip ring 110.

The slip ring 110 may further include an outer slip ring 112 that rotates together with the rotary 2; and an inner slip ring 114 disposed inside the outer slip ring 112.

The outer slip ring 112 can be fixed to the rotary 2.

The outer slip ring 112 may be connected to a cooling water inlet pipe (not illustrated) that guides cooling water to the mold 3 and a cooling water outlet pipe (not illustrated) that discharges cooling water that cools the mold 3.

The cooling water inlet pipe and the cooling water outlet pipe can correspond 1:1 with the mold 3.

The inner slip ring 114 can be positioned fixedly in the rotary station 1.

The size of the inner slip ring 114 may be smaller than the size of the outer slip ring 112.

A space 116 can be formed between the outer slip ring 112 and the inner slip ring 114.

The space 116 may be used as a cooling flow path through which cooling water passes to cool the mold 3 or may be a passage through which electrical wires (not illustrated) pass.

In the space 116, a cooling water inlet flow path and a cooling water outlet flow path can be partitioned by a barrier.

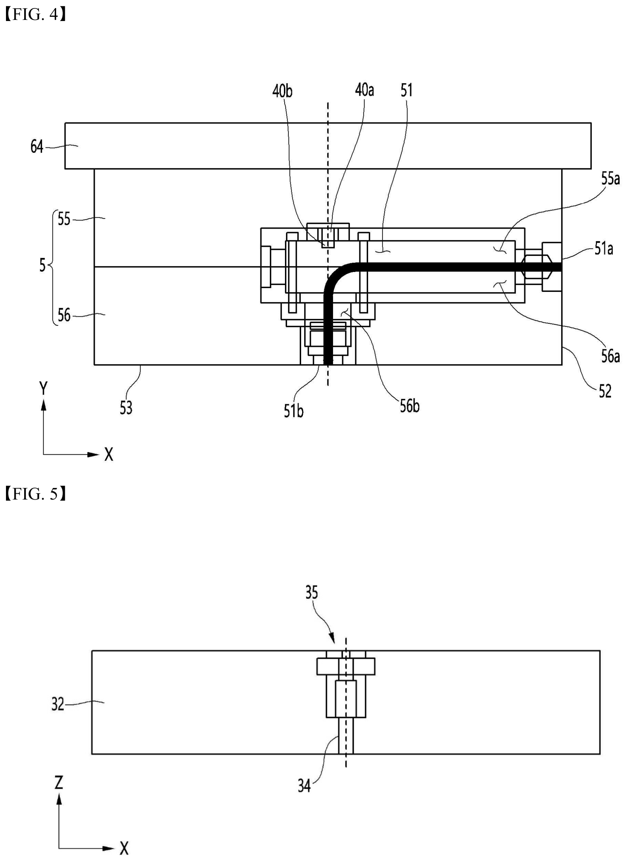

FIG. 4 is a view illustrating a guide according to the present embodiment.

The guide 5 may include an upper plate 55; and a lower plate 56.

The upper plate 55 can form the upper surface and the peripheral surface of the guide 5.

The upper plat 55 can be fixed to the guide holder 64.

An upper guide groove 55a that guides the material in a horizontal direction X can be formed on the lower surface of the upper plate 55.

The inlet of the upper guide groove 55a can be formed on the injection machine facing surface 52.

The lower plate 56 can form the lower surface and the peripheral surface of the guide 5.

The upper surface of the lower plate 56 can be fixed to the lower surface of the upper plate 55.

The upper surface of the lower plate 56 can be bonded to the lower surface of the upper plate 56. The upper surface of the lower plate 56 can be diffusion bonded to the lower surface of the upper plate 56.

When the guide 5 is lowered by the lifting and lowering mechanism 6, the lower plate 56 can come into contact with the upper surface of the movable mold 32 and press the movable mold 32 downward.

A lower guide groove 56a that guides the material in a horizontal direction X can be formed on the upper surface of the lower plate 56.

The inlet of the lower guide groove 56a can be formed on the injection machine facing surface 52.

The lower guide groove 56a may be opposed to the upper guide groove 55a. The lower guide groove 56a may be opposed to the upper guide groove 55a in the vertical direction Z.

The upper guide groove 55a and the lower guide groove 56a can form an inlet passage among the guide passages 51.

The upper guide groove 55a and the lower guide groove 56b can be opened in the horizontal direction X.

The guide heater 54 (see FIG. 3) can heat the upper guide groove 55a and the lower guide groove 56a around the upper guide groove 55a and around the lower guide groove 56a.

A guide passage 56b may be formed through the lower plate 56. The guide passage 56b may be opened in the vertical direction Z. The guide passage 56b may be formed through the lower plate 56 in the vertical direction Z.

The guide passage 56b can guide the material guided to the upper guide groove 55a and the lower guide groove 56a to the injection passage 34.

The guide passage 56b can constitute an exit passage among the guide passages 51.

The inlet of the guide passage 56b can be connected to at least one of the upper guide groove 55a and the lower guide groove 56a.

The exit of the guide passage 56b may be formed on the movable mold facing surface 53. The exit of the guide passage 56b may be the exit 51b of the guidance-passage 51. The exit of the guide passage 56b may be formed at the lower end of the lower plate 56.

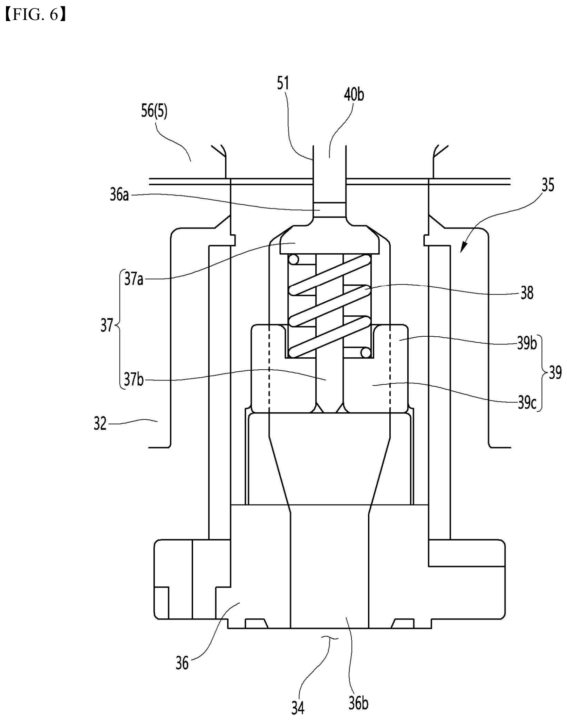

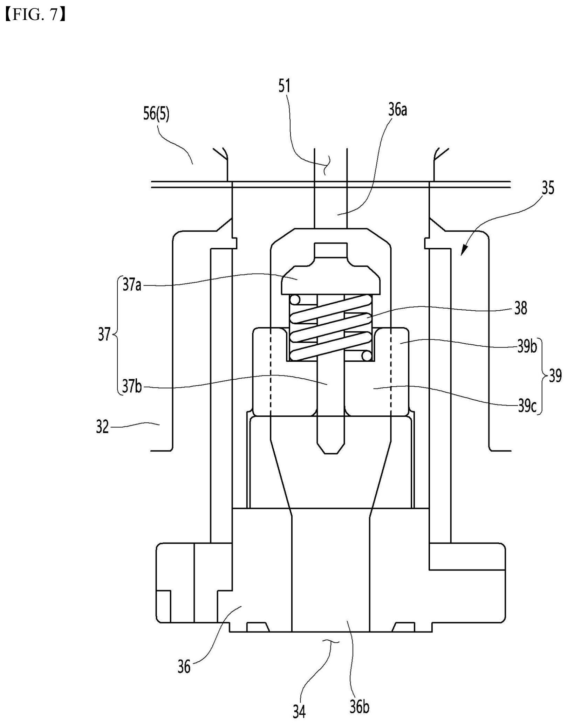

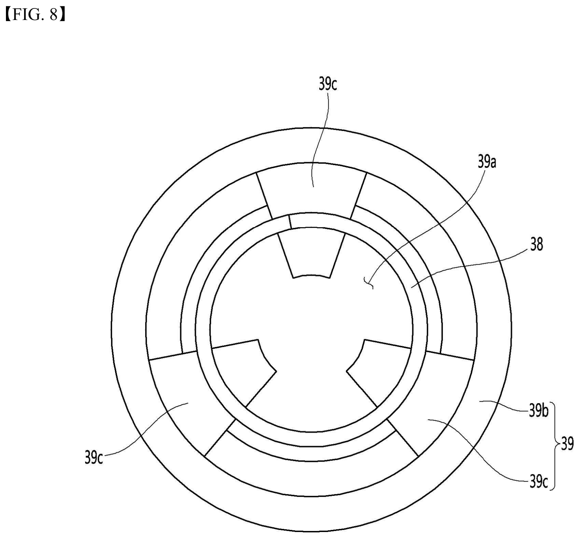

FIG. 5 is a diagram illustrating a movable mold according to the present embodiment; FIG. 6 is a view illustrating when the injection passage of the movable mold according to the present embodiment is closed; FIG. 7 is a view illustrating when the injection passage of the movable mold according to the present embodiment is opened; and FIG. 8 is a plan view illustrating a spring sheet according to the present embodiment
The injection molding machine may further include a one-way valve 35 to prevent backflow of material.

A one-way valve 35 can be placed in the injection passage 34.

The one-way valve 35 can be opened by the material supplied to the guide 5.

After the material passes through the guide passage 56b formed in the guide 5, the material can be supplied to the one-way valve 35, and the one-way valve 35 can be opened by the material.

If material is not supplied from the guide 5 to the one-way valve 35, the one-way valve 35 can be closed.

A one-way valve 35 may include a valve body 36 having an upper through-hole 36a and a lower through-hole 36b formed therein; a valve element 37 that is arranged to be lifted and lowered in the valve body 36 and opens and closes the upper through-hole 36a; a spring 38 that elastically supports the valve element 37; and a spring seat 39 that supports the spring 38 inside the valve body 36 and has an inner through-hole 39a formed therein through which a material passes.

The valve body 36 can be placed inside the injection passage 34 of the movable mold 32.

The upper end of the valve body 36 can be placed on the upper end of the movable mold 32.

The lower end of the valve body 36 can be placed inside the movable mold 32.

The valve element 37 may include an upper valve 37a seated on the upper end of a spring 38 and a lower shaft 37b protruding from the lower end of the upper valve 37a.

The upper valve 37a can open and close the upper through-hole 36a.

An example of a spring 38 may be a coil spring.

The upper end of the spring 38 can come into contact with the lower surface of the upper valve 37a.

The spring 38 can surround the lower shaft 37b.

The lower end of the spring 38 can come into contact with the spring seat 39.

The spring seat 39 may include an outer seat 39b that surrounds the spring 38 on the outside of the spring 38 and an inner seat 39c that protrudes from the inner circumference surface of the outer seat 39b and on which the lower end of the spring 38 is seated.

The outer seat 39b may have a hollow shape with the interior open in the vertical direction.

The outer diameter of the outer seat 39b may be smaller than the inner diameter of the valve body 36.

The upper end of the outer seat 39b can come into contact with the inside of the valve body 36.

A plurality of inner seats 39c can be formed. A plurality of inner seats 39c can be spaced apart in the circumference direction of the spring seat 39.

The inner through-hole 39a can be formed inside the outer seat 39b. The inner through-hole 39a can be formed between adjacent inner seats 39c.

Material passing through the guidance-passage 51 of the guide 5 can flow into the upper through-hole 36a of the valve body 36, the valve element 37 can be lowered by being pushed by the material, and the material can flow between the valve body 36 and the valve element 37 through the gap between the upper through-hole 36a and the valve element 37.

The material inside the valve body 36 can pass through the inner through-hole 39a of the spring seat 39, then the lower through-hole 36b of the valve body 36, and then pass through the injection passage 34 of the movable mold 32, and then be filled into the cavity 33(see FIG. 3).

When the material is completely filled into the cavity 33, the spring 38 can lift the valve element 37 by the restoring force, and the valve element 37 can block the upper through-hole 36a of the valve body 36, and the material flowing into the injection passage 34 is blocked by the valve element 37 and cannot flow back upward.

The injection molding machine may further include a cylinder 40a arranged on an upper plate 55 or a lower plate 56; and a lifting and lowering pin 40b that is lowered into the upper through-hole or lifted above the upper through-hole by the cylinder 40a.

When the lifting and lowering pin 40b is lowered, the outer circumference of the lifting and lowering pin 40b can be spaced apart from the guide passage 56b in the horizontal direction X.

Before the injection machine 4 supplies the material, the cylinder 40a can be controlled in a lifting mode, and the lifting and lowering pin 40b can be lifted to open the upper through-hole 36a of the one-way valve 35.

When the injection machine 4 completes supplying the material, the cylinder 40a can be controlled in a lowering mode, and the lifting and lowering pin 40b can be lowered to seal the upper through-hole 36a of the one-way valve 35.

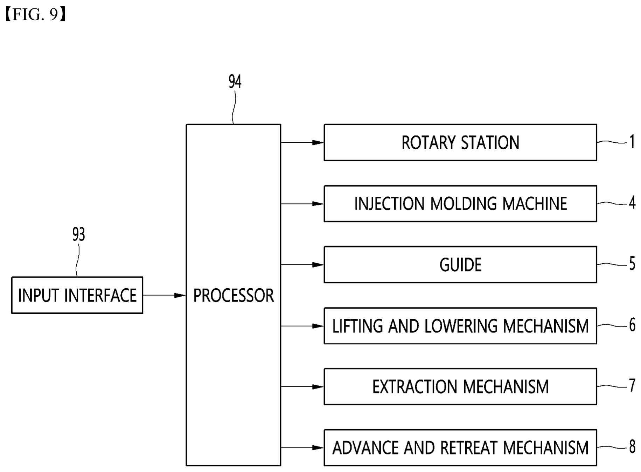

FIG. 9 is a control block diagram illustrating an injection molding machine according to the present embodiment.

The injection molding machine may further include an input interface 93 and a processor 94.

The input interface 93 may include buttons, switches, or a touch screen through which a worker can input various commands for the injection molding machine.

The processor 94 can control the overall operation of the injection molding machine. The processor 94 can configure a control device 92 disposed on the shelf 9.

The processor 94 can control the rotary station 1, the injection machine 4, the guide 5, the lifting and lowering mechanism 6, the extraction mechanism 7, and the advance and retreat mechanism 8.

The processor 94 can control the rotation driving source 12 of the rotary station 1.

The processor 94 can control the main heater 43 of the injection machine 4. The processor 94 can control the injection motor 47.

The processor 94 can control the guide heater 54 of the guide 5.

The processor 94 can control the lifting and lowering cylinder 63 of the lifting and lowering mechanism 6.

The processor 94 can control the extraction cylinder 72 of the extraction mechanism 7.

The processor 94 can control the advance and retreat driving source 82 of the advance and retreat mechanism 8.

The processor 94 can control the cylinder 40a in either a lifting mode or a lowering mode.

Below, the operation of the rotary multi-injection molding machine is described.

The processor 94 can sequentially perform an injection process, a first rotation process, a cooling process, a second rotation process, an extraction process, and a third rotation process, and the injection process, the first rotation process, the cooling process, the second rotation process, the extraction process, and the third rotation process can constitute one cycle for molding a product (molded product or finished product).

The injection process, cooling process, and extraction process can each be performed during the first hour.

Each of the first rotation process, the second rotation process, and the third rotation process can be performed for a second time.

The first hour may be longer than the second hour.

During the injection process, the processor 94 advances the injection machine 4 forward, and when the injection machine 4 is advanced, the nozzle 42 of the injection machine 4 can be connected to the guidance-passage 51 of the guide 5. After the nozzle 42 is connected to the guidance-passage 51 of the guide 5, the processor 94 can control the injection machine 4 to fill the material into the guide 5. The material molded in the injection machine 4 can pass through the guidance-passage 51 of the guide 5, and then pass through the injection passage 34 of the movable mold 32 located in the injection region A1, and be filled into the cavity 33.

The processor 94 can pressurize the mold 3 for a set time (for example, 4 seconds), and after the set time has elapsed, the processor 94 can retreat the injection machine 4. When the injection machine 4 retreats, the nozzle 42 of the injection machine 4 can be separated from the guidance-passage 51 of the guide 5, and the nozzle 42 can be spaced apart from the guide 5.

The processor 94 can perform a first rotation process after the injection process. The processor 94 can drive the rotation driving source 12 for a rotation setting time, and the rotation driving source 12 can rotate the rotary 2 at a setting angle (for example, 120°), and the mold 3 in the injection region A1 can be moved to the cooling region A2.

The mold 3 in the cooling region A2 is maintained for a cooling setting time, and the material within the mold 3 can be solidified to become a product (molded product or finished product). When the cooling setting time has elapsed, the cooling process can be completed.

The processor 94 can perform a second rotation process after the cooling setting time. The processor 94 can drive the rotation driving source 12 for the rotation setting time, and the rotation driving source 12 can rotate the rotary 2 at a setting angle (for example, 120°), and the mold 3 in the cooling region A2 can be moved to the extraction region A3.

When the mold 3 in the cooling region A2 is moved to the extraction region A3, the processor 94 can initiate the extraction process.

The processor 94 can lower the magnet 74 during the extraction process to fasten the magnet 74 to the movable mold 32, and when the fastening with the movable mold 32 is completed, the magnet 74 can be lifted. When the magnet 74 is lifted, the movable mold 32 located in the extraction region A3 can be lifted, and the mold 3 located in the extraction region A3 can be opened.

An extraction machine such as a robot can extract a product (molded product or finished product) that has been molded in a mold 3 to the outside of the mold 3.

After the product extraction is completed, the processor 94 can lower the magnet 74 to seat the lifted movable mold 32 back on the fixed mold 31, and the mold 3 can be closed. After the mold 3 is closed, the magnet 74 can be separated from the mold 3.

After the mold 3 is closed, the processor 94 can perform the third rotation process. The processor 94 can drive the rotation driving source 12 for a rotation setting time, and the rotation driving source 12 can rotate the rotary 2 at a setting angle (for example, 120°), and the mold 3 in the extraction region A3 can be moved back to the injection region A1.

The processor 94 can repeat one cycle consisting of an injection process, a first rotation process, a cooling process, a second rotation process, an extraction process, and a third rotation process.

The above description is merely an example of the technical idea of the present disclosure, and those skilled in the art will appreciate that various modifications and variations may be made without departing from the essential characteristics of the present disclosure.

Accordingly, the embodiments disclosed in the present disclosure are not intended to limit the technical idea of the present disclosure but to explain it, and the scope of the technical idea of the present disclosure is not limited by these embodiments.

The scope of protection of the present disclosure should be interpreted by the claims below, and all technical ideas within a scope equivalent thereto should be interpreted as being included in the scope of the rights of the present disclosure.

## Claims

1. An injection molding machine comprising:
a mold in which a cavity is formed in at least one of a fixed mold and a movable mold and in which an injection passage through which a material passes through the movable mold is formed;
an injection machine molding and supplying a material;
a guide guiding the material supplied from the injection machine into the injection passage; and
a lifting and lowering mechanism lifting and lowering the guide,
wherein when the guide is lowered by the lifting and lowering mechanism, the guide presses the movable mold from an upper side of the movable mold,
wherein the guide includes:
an upper plate; and
a lower plate having an upper surface bonded to a lower surface of the upper plate,
wherein an upper guide groove is formed on the lower surface of the upper plate for guiding material in a horizontal direction,
wherein a lower guide groove is formed on an upper surface of the lower plate for guiding material in a horizontal direction opposite the upper guide groove, and
wherein a guide passage is formed penetrating the lower plate for guiding material guided by the upper guide groove and the lower guide groove to the injection passage.

2. The injection molding machine of claim 1,
wherein the upper surface of the lower plate is diffusion bonded to the lower surface of the upper plate.

3. The injection molding machine of claim 1,
wherein the movable mold is seated on an upper surface of the fixed mold, and
wherein the lower plate is in contact with an upper surface of the movable mold when the guide is lowered by the lifting and lowering mechanism.

4. The injection molding machine of claim 1, further comprising:
an one-way valve arranged in the injection passage and opened by the material.

5. The injection molding machine of claim 4,
wherein the one-way valve includes:
a valve body having an upper through-hole and a lower through-hole formed therein;
a valve element arranged to be lifted and lowered in the valve body and opens and closes the upper through-hole;
a spring elastically supporting the valve element; and
a spring seat supporting the spring inside the valve body and having an inner through-hole formed through which the material passes.

6. The injection molding machine of claim 5, further comprising:
a cylinder arranged on the upper plate or the lower plate; and
a lifting and lowering pin lowered into the upper through-hole or lifted above the upper through-hole by the cylinder.

7. The injection molding machine of claim 6,
wherein an outer circumference of the lifting and lowering pin is spaced from the guide passage in a horizontal direction.

8. The injection molding machine of claim 1, further comprising:
an advance and retreat mechanism for advancing the injection machine to the guide or for retreating the injection machine from the guide.

9. The injection molding machine of claim 1,
wherein the guide includes:
an injection machine facing surface facing the injection machine, and
a movable mold facing surface facing the movable mold, and
wherein an inlet of the upper guide groove and an inlet of the lower guide groove are formed on the injection machine facing surface, and
wherein an outlet of the guide passage is formed on the movable mold facing surface.

10. The injection molding machine of claim 9,
wherein the guide includes a lower surface, an upper surface, and a plurality of peripheral surfaces, and
wherein the injection machine facing surface is one of the plurality of peripheral surfaces, and
wherein the movable mold facing surface is the lower surface.

11. The injection molding machine of claim 1,
wherein the upper guide groove and the lower guide groove are opened in a horizontal direction, and
wherein the guide passage is opened in a vertical direction.

12. The injection molding machine of claim 1,
wherein a guide heater is installed in the guide for heating the upper guide groove and the lower guide groove.

13. The injection molding machine of claim 1,
wherein the lifting and lowering mechanism includes:
a lifting and lowering guide;
an upper body installed on the lifting and lowering guide;
a pressure cylinder installed on the upper body; and
a guide holder lifted and lowered by the pressure cylinder, and
wherein the guide is arranged below the guide holder.

14. The injection molding machine of claim 1, further comprising:
a rotary station having a rotational driving source arranged; and
a rotary arranged above the rotary station and rotated by the rotational driving source,
wherein a plurality of molds are provided, and
wherein the plurality of molds are arranged spaced apart from each other on the rotary.

15. The injection molding machine of claim 14,
wherein the fixed mold is fixed to an upper surface of the rotary.
